# EUROPEAN PATENT APPLICATION

(11) **EP 2 106 078 A1**
(43) Date of publication of application: **30.09.2009**
(21) Application number: 08153529.6
(22) Date of filing: 28.03.2008
(51) Int. Cl.: H04L 12/58

(54) **Controlled access to contact information of a user**

(71) Applicant: Nokia Siemens Networks Oy, 02610 Espoo (FI)
(72) Inventor: Dostal, Pavel, 79828, Morice (CZ); Laurila, Antti, 00660, Helsinki (FI)
(74) Representative: Äkräs, Tapio Juhani

(57) **Abstract**

A method, and apparatuses implementing the method for accessing contact information of a user. Contact information file of a first user is stored and access to it is controlled with an authorization policy of the first user. The authorization policy comprises group information, and a filter associated with the group. The group information defines at least one group allowed to access the contact information file of the first user, and the filter defines a set of one or more contact information records of the contact information file available to that group. When a request for contact information is received from a second user, the filter and the group information are used to control the availability of the contact information to the second user.

## Description

### FIELD OF THE INVENTION

The present invention relates to communications and more particularly to a method, and apparatuses implementing the method for accessing contact information of a user.

### BACKGROUND OF THE INVENTION

Contact refers typically to a communicative interaction between two or more parties. In order to facilitate such communicative interaction, at least an originating party must posses some type of contact information that enables creation of connection to a target party.

Contact may be made in many ways and therefore also contact information exists in many forms. For face-to-face contacts address information is necessary. Telephone calls are made by dialing subscriber numbers and emails are routed to the destination according to the email address of the message. Also the way of searching for contact information may vary. For example, an originating party may wish to initiate a call to a Marketing Manager of a particular company, without actually knowing who the person is. On the other hand, a friend may have lost a new mobile phone number of his friend and needs to acquire it for a short message on the basis of the friend's name.

While the possibilities for contacting and addressing a person are increasing, the means for searching and acquiring the necessary contact information have evolved considerably. Naturally conventional printed phone-books and calling cards are still widely used. Advanced telecommunication users utilize electronic business cards (for example vCards) that may be exchanged via various telecommunication technologies. There exists also a wide range of list services that collect contact information of people and sell this contact information to requesting users.

However, when a piece of information is changed, there is a delay in the automatic updating routines of the service providers. Additionally, part of the contact information is not maintained by any party, which means that after a change in one's contact information, a group of people affected by this change needs to be identified and messages on the changed data need to be delivered to each of them. When people are busy there is also a big risk that such update messages will not be treated properly and the relevance of the information stored by different parties may vary considerably.

In order to alleviate these problems, Open Mobile Alliance has initiated a program that studies possibilities for Converged Address Book (CAB) enabler. The aim is to use and refer to existing relevant standards and specifications to develop an enabler for a network based address book that allows the use of a single address book by a variety of services and devices. The work is in the early stages, but already now it has been noted that all information in the address book of a user cannot be shared by other users of the address book. The view to the address book information must be different, depending on the identity or type of the requesting party. There has been a lot of discussion of the content of the different views but so far no feasible technical solution has been presented.

Firstly, the need for control is evident, but most of the subscribers of the address book service are not willing to spend time and effort to laborious control definitions. Especially when the amount of contacts is big, making and maintaining individual view definitions for all the contacts would likely induce more work than what is saved by the useful CAB operations. Additionally, any conventional organization-based access hierarchies do not apply in this context, because the personal hierarchies vary from user to user.

On the other hand, CAB converges information from a plurality of different communication technologies and facilities. Existing and applied technologies should be utilized as much as possible.

### SUMMARY OF THE INVENTION

An object of the present invention is thus to provide a solution so as to provide a simple and straightforward way for single user to provide control-lably different views to their own contact information. The objects of the invention are achieved by a method, an apparatus, and a computer program product for implementing the method, which are characterized by what is stated in the independent claims. The preferred embodiments of the invention are disclosed in the dependent claims.

The invention is based on the idea of applying to requests for contact information of a user a user-specific authorization policy that comprises group information defining groups of users allowed to access the contact information file, and filters associated with the groups and defining a set of one or more contact information records of the contact information file available to that group.

The method and arrangement of the invention provides a quick and easy way to provide different users with different views to centrally maintained contact information of a user.

### BRIEF DESCRIPTION OF THE DRAWINGS

In the following the invention will be described in greater detail by means of preferred embodiments with reference to the drawings, in which
Figure 1 illustrates various possibilities for communicating with one user;
Figure 2 illustrates a structure of an exemplary contact information file;
Figure 3 illustrates steps of a method performed in a network node;
Figure 4 illustrates steps of a method performed in a communication device of a user;
Figure 5 illustrates an exemplary hardware configuration for the implementation of embodied apparatuses.

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention is applicable in a communication system that provides delivery of data steams between communicating endpoints. A variety of systems applying a variety of communication technologies may be used separately or in combinations to implement the embodiments of the invention. Communication systems and technologies evolve continuously, and embodiments of the invention will require a number of modifications obvious for a person skilled in the art. Therefore all words and expressions of this specification should be interpreted broadly, as they are intended merely to illustrate, not to restrict, the embodiments.

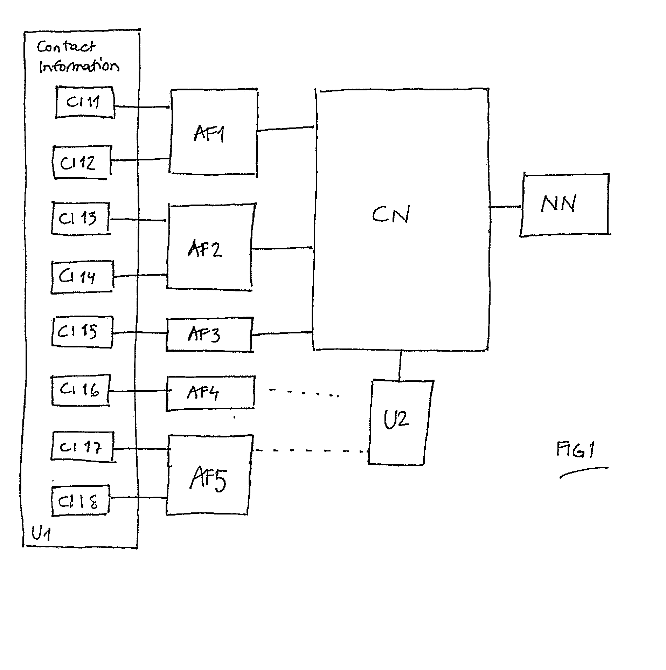

In the following, some embodiments of the invention will be described by means of an exemplary communication system that allows a user to be accessed via a variety of connectivity types. Figure 1 illustrates various possibilities for communicating with one user. A user refers here to an operational entity whose communications are controlled by one entity. In case the entity is a person, the communications are controlled by the person him/herself. In case the entity is a legal entity, the communications are controlled by defined communication policies of the legal entity.

Communication requires at least one access facility that provides a user with means to transmit information to one or more communicating parties and to receive information from one or more communication parties. Use of the access facility requires contact information that enables identification of the user and optionally provides other associated information, for example data applicable in identifying the user. As illustrated in Figure 1, modern users typically apply a variety of different access facilities, each of which associated with different contact information. Figure 1 shows a first user U1, that may be contacted with a plurality of access facilities AF1, AF2, AF3, AF4, AF5.

Some of the access facilities AF1, AF2, AF3 are networked telecommunication facilities that require use of communication system elements. This means that the user needs to have a communication device that, together with the software, applications, and content that are directly related to the device, functions within and is supported by a communication network. The communication network typically comprises at least one or more core networks that provide network services, and one or more access networks through which various users may access these core network services. The core network refers herein to a transmission facility composed of networks, system equipment and infrastructures configured to provide connections between access networks and between service enablers and access networks. An access network represents herein an implementation of network entities and interfaces that provide required transport bearer capabilities for the provision of telecommunication services to terminal equipment of the communication system. Terminal equipment represents herein a uniquely identifiable system entity that sources and sinks data streams of one or more defined protocol layers.

In the current embodiment U1 represents a user that is able to operate a plurality of terminal devices and is therefore accessible using a variety of networked telecommunication access facilities. For example, let us assume contact information Cl11 and Cl12 represents here contact information for use of circuit switched telephone services. Cl11 comprises at least the subscriber number to the office phone and Cl12 comprises the subscriber number to the home phone. AF1 represents here a combination of terminal equipment, network entities and interfaces of Public Switched Telephone Network (PSTN). AF2 relates to a combination of terminal equipment, network entities and interfaces of electronic mail services, and Cl13 comprises at least the email address to the company and Cl14 comprises at least the email address used by U1 for his personal mails. AF3 relates to a combination of terminal equipment, network entities and interfaces for mobile communication services and Cl15 comprises at least the mobile phone number of U1.

In this context, networked access facilities AF1, AF2, AF3 represent network entities and interfaces for circuit switched, packet switched and radio access, respectively, and they are interconnected through a core network CN.

There are naturally also access facilities that are not networked telecommunication access facilities. A variety of local communication mechanisms allow direct exchange of information between the communicating devices. Examples of such mechanisms comprise, for example, Bluetooth, Infrared Data Association (IrDA), Radio Frequency Identification (RFID), Digital Enhanced Cordless Telecommunications (DECT), Dedicated Short Range Communications (DSRC), HIPERLAN, HIPERMAN, Institute of Electrical and Electronics Engineers (IEEE) 802.11, Ultra-wideband (UWB), Institute of Electrical and Electronics Engineers (IEEE) 802.16 (WiMAX), xMax, ZigBee, Institute of Electrical and Electronics Engineers (IEEE) 802.16 (WPAN), Wireless USB. Typically the various addresses of these systems are not publicly shared but for some applications also this type of contact information may be valuable. Let us assume, for example, that U1 has a mobile phone that comprises a Bluetooth device, the address of which is comprised in the contact information Cl16 for gaming purposes. In the example the mobile phone of a community of players comprises an application that detects from all Bluetooth devices within the range a Bluetooth device of the member of the community and informs the mobile phone user on the possibility for local gaming instance. AF4 thus represents a combination of terminal equipment and interfaces for Bluetooth communication.

The most elementary type of contact information associates with manual access, meaning visit to a location of the user. Let us assume, Cl17 comprises address information to the office of U1 and Cl18 comprises the home address of U1, and AF5 represents home and office facilities locating in those addresses.

A second user U2 that wishes to communicate with U1 typically has a variety of possible access facilities but in many times does not have adequate information to contact U1. For example, it may be that U2 would like to pay a visit to U1 but does not have the address of U1. Alternatively, U2 might need to deliver some urgent information to U1 that is on holiday but U2 only has the office number of U1. On the other hand, U1 may have dutifully informed all relevant parties of all his relevant numbers, but is subsequently called to work for another company. Distributing the mass of contact information in a proper manner any time a change is made is a truly laborious effort that most of the users wish to overcome.

In the present embodiment this is overcome by introducing to the communication system a network node NN that is made accessible through the communications system and is configured to provide a contact information service where a user may store and maintain his/her contact information through centralized contact information file.

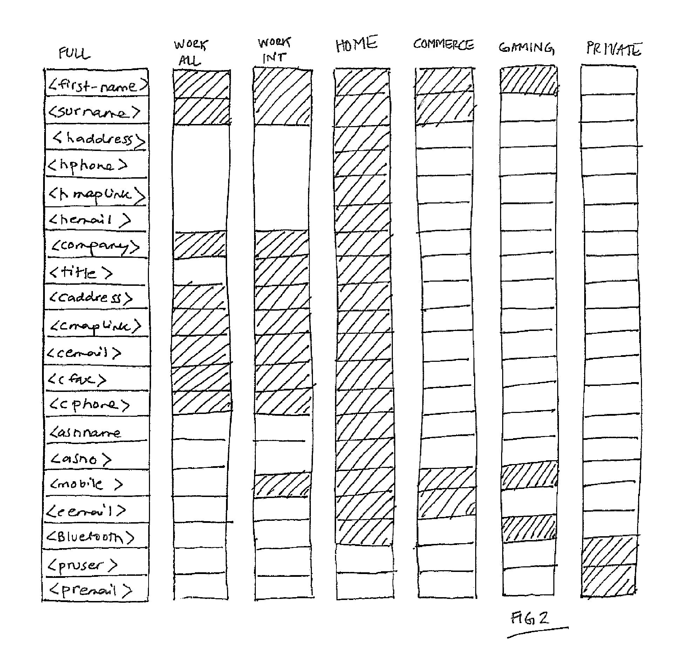

Figure 2 illustrates a structure of an exemplary contact information file of U1. The contact information elements Cl11...Cl17 are stored in a structure of records that may be parsed and the relative arrangement of information within them duly interpreted with applied software. As an example, in this embodiment it is assumed that the contact information file is structured to Extensible Markup Language (XML) format, but any other format fulfilling the above requirement is applicable. The Extensible Markup Language (XML) is a general-purpose specification for creating custom markup languages, and allows its users to define their own elements. It has been primarily designed to facilitate sharing of structured data across different information systems, particularly via the Internet, and it may be used both to encode documents and to serialize data. XML specifications define a lexical grammar and requirements for parsing.

Tag names of Figure 2 represent full records of the contact information elements Cl11...Cl17. The exemplary full contact information file of U1 comprises records:

| | |
|---|---|
| < first-name > | first name of U1 |
| < surname > | surname of U1 |
| <haddress> | home address of U1 |
| <hphone> | home fixed line number of U1 |
| <hmaplink> | address maplink to home of U1 |
| <hemail> | home email address |
| <company> | company name |
| <title> | professional title of U1 |
| <caddress> | company address to the office of U1 |
| <cmaplink> | address maplink to the office of U1 |
| <cemail> | work email address to U1 |
| <cfax> | fax number to the office of U1 |
| <cphone> | office fixed line number |
| <asname> | name of U1's assistant |
| <asno> | office number of U1's assistant |
| <mobile> | mobile phone number of U1 |
| <eemail> | U1 email address for online shopping |
| <Bluetooth> | Bluetooth device number of U1's mobile phone |
| <pruser> | chat username of U1 |
| <premail> | chat email address of U1 |

It is clear that U1 does not want all this information to be made available to all users. On the other hand, it is equally evident that U1 does not wish to create separate views to all potential information requesters. According to the invention, U1 creates a personal group of views to which information is filtered from the full contact information file. Users may then be assigned to groups according to his/her personal preferences and they may thereafter receive a corresponding set of up to date contact information in a consistent but easily controlled manner.

In Figure 2, association of contact information records with different groups is illustrated. Group 'Work all' is for users that are professional contacts and need to receive the general office information, but preferably not details that may be confidential. Group 'Work internal' is for users that are closer contacts, like colleagues and friends, that need to be able to access also more detailed contact information, both at the office and at home. Group 'Home' is for closest people who will be granted access to any contact information of U1, except a completely private email address that U1 uses for his most private chat sessions. Group 'Commerce' is for contacts U1 has made when buying and selling goods in eBay and is allowed with very limited view, not even the full name information of U1. Group 'gaming' is for community of players of a particular mobile live game and in addition to first name information provides the mobile phone number and the number of the Bluetooth device within the mobile phone. Group 'Private' is for users in the private chat group that U1 is a member of. The views with the corresponding records made accessible to the groups are illustrated with lineation in Figure 2.

For controlled access to the contact information file, there is also defined an authorization policy and the network node comprises, or is connected to, a functional element that performs the authorization policy. For each of these views the authorization policy comprises at least two types of definitions and corresponding checks, one for access group memberships and one for composition of available records. It should be noted that the above examples of contact information elements, contact information records and contact information file structures are simplified examples only. Names of the records and access types may be changed without deviating from the scope of protection.

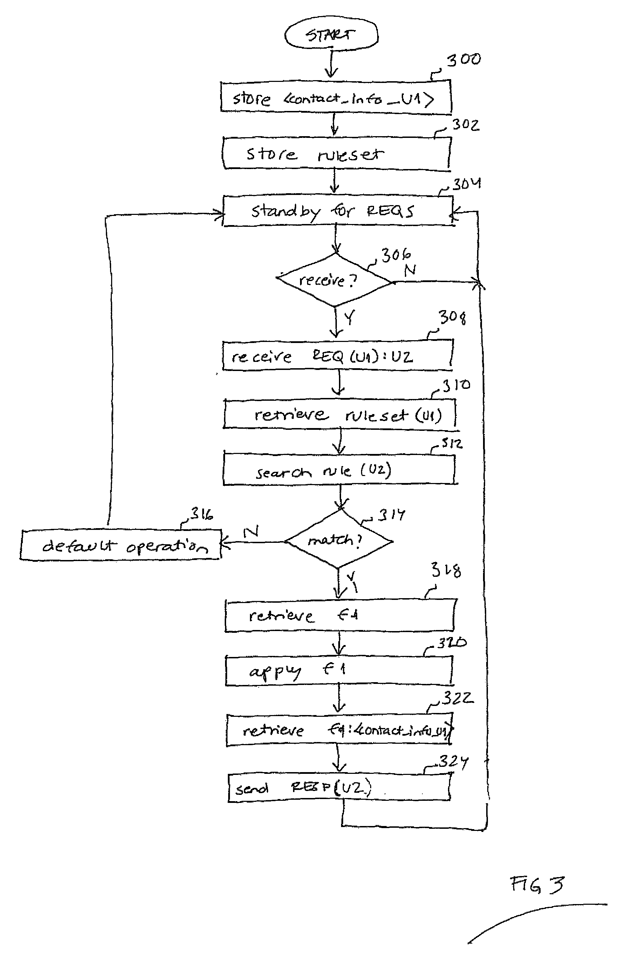

In the present embodiment, the network node NN stores an authorization policy of U1 and also performs the authorization policy when a request for contact information of U1 is received from U2. The flow chart of Figure 3 illustrates steps of a method performed in NN when implementing an embodiment of the present invention. The procedure begins at a stage where NN is operable and connected to the network. A full set of contact information records <contact_info_U1> is stored (step 300) into the network node. Let us assume that the full contact information is an XML file that comprises elements <name>, <address>, <office>, <company>, <phone>, and <mobile>. The elements <name>, <address>, <office>, comprise subelements <first-name>, <surname>, <street>, <number>, <city>, <state>, as follows:

```
 <?xml version="1.0" encoding="UTF-8"?>
 <contact-info>
 <name>
 <first-name>John</first-name>
 <surname>Smith</surname>
 </name>
 <address>
 <street>Homestreet</street>
 <number>989</number>
 <city>Zelesice</city>
 <state>Czech Republic</state>
 </address>
 <office>
 <street>Officestreet</street>
 <number>565</number>
 <city>Brno</city>
 <state>Czech Republic</state>
 </office>
 <company>ANF Data</company>
 <phone>+4205432154321 </phone>
 <mobile>+420765765765</mobile>
 </contact-info>
```

When the contact information is stored, an authorization policy for this contact information is established. In this embodiment the authorization policy comprises XML files, each of which comprises a SIMPLE filter. SIMPLE refers in this embodiment to SIP for Instant Messaging and Presence Leverag-ing Extensions protocol that is designed to share presence and instant messaging information across different service providers' networks. SIMPLE uses the session initiation protocol (SIP) and existing implementations of SIP to provide presence and instant messaging service. The XML file is associated with a group definition such that the XML file is activated when a member of the corresponding group is the requesting user.

Let us assume that user U1 (Mr. Smith) has three different groups to which he wishes to allow different access to this contact information. Accordingly, for office contacts he creates an XML file f1 that comprises a filter '123':

```
 <?xml version="1.0" encoding="UTF-8"?>
  <filter-set xmlns="urn:ietf:params:xml:nsaimple-filter">
   <filter id="123">
    <what>
     <include type="xpath">/contact-info/name</include>
     <include type="xpath">/contact-info/office</include>
     <include type="xpath">/contact-info/company</include>
     <include type="xpath">/contact-info/phone</include>
    </what>
   </filter>
  </filter-set>
```

The SIMPLE filter used here as an XML filter provides a mechanism for defining preferred content to be delivered and rules for when that information is to be delivered. A <what> element of the XML filter may be used to define the content to be delivered to the user. It does not specify the exact content but the rules that are used to construct the information. The <what> element may contain one or more <include> elements to add records to a filtered XML file and one or more <exclude> elements to deplete records from the filtered XML file. In this example, for office contacts records Mr. Smith's first name, surname, and contact information to the office are included, but the home address and the mobile phone number are not.

On the other hand, with his friends, Mr. Smith would also like to share the home address, but not the mobile phone number that is for work use only. In order to achieve this, Mr. Smith stores another file f2 that comprises a filter '234'

```
 <?xml version="1.0" encoding="UTF-8"?>
  <filter-set xmlns="urn:ietf:params:xml:nsaimple-filter">
   <filter id="123">
    <what>
     <exclude type="xpath">/contact-info/mobile</exclude>
    </what>
   </filter>
  </filter-set>
```

These two filter files provide different views to the contact information of Mr. Smith. In order to avail one of these views to his friend Mr. Jones, Mr. Smith also stores a following ruleset:

```
 <ruleset>
 <rule id="a7c">
  <conditions>
   <identity uri="adam.jones@nsn.com"/>
  </conditions>
  <actions>
   <provide-view>work</provide-view>
 </rule>
 </ruleset>
```

According to this ruleset, NN checks incoming requests and if the source address of the request is 'adam.jones@nsn.com', an action for providing the view for office contacts is initiated. This is done by calling and activating filter file f1 described above. A corresponding set of condition <identity uri="james.smith@yahoo.com"/> and action <provide-view>home</provide-view> for a famility member of Mr. Smith could be included in the ruleset, and a request from that person would result in activation of filter file f2 described above.

These simplified ruleset examples illustrate a simple mechanism by which Mr. Jones is granted a controlled access to contact information of Mr. Smith. The present embodiment is based on typical common policy structure, but it is clear that the format and structure of the files forming the authorization policy may be changed without deviating from the scope of protection. For example, the filter files may be stored and activated separately for each group, or they may be integrated to a combined filter file from which filters may be activated separately. Alternatively, filter files may be included directly to the ruleset.

Also the group definitions may be included in the ruleset, as described above, or in one or more separate XDM files. In addition, the conditions do not necessarily have to refer to an URI. Any other address or identity type may be applied. Furthermore, other matching criteria may be applied without deviating from the scope of protection. For example, separation to groups may be determined on the basis of domain name, or the server the request is originated from.

Accordingly, when the authorization policy of U1 is established and stored in NN, NN becomes standby (step 304) for requests for U1 contact information. If (step 306) a request REQ for contact information of U1 is received (step 308) from U2, NN retrieves (step 310) the stored ruleset <con-tact_info_U1> and checks (step 312) whether a rule corresponding to U2 information included in the request exists. If (step 314) no match is detected, a default operation is initiated (step 316). In this example, a default function is to deny access from any non-familiar requester. A default operation could also comprise providing only some elementary information on U1, like name, company name and office number that have been traditionally available in printed phone books.

If (step 314) a match is found (e.g. request received from Mr. Jones), NN retrieves (step 318) a filter file f1 and applies (step 320) f1 to the full contact information file to generate (step 322) a XML file comprising filtered contact information f:<contact_info> available to U2. NN sends (step 324) the generated f:<contact_info> file to the requesting user and returns to step 304 to standby for more requests.

In a basic form for the request is interpreted as a request to provide any available contact information of U1 to the requesting user U2. Alternatively, the request may identify specific records to be retrieved and the network node may provides from the group of requested records only a subset of records that are available to the requesting user U2.

Due to the invention, any contact information of user U1 may be stored and updated in one place and the changes to the contact information itself or to the availability of specific records may be immediately reflected to numerous other users without laborious task of adjusting each user specific view separately.

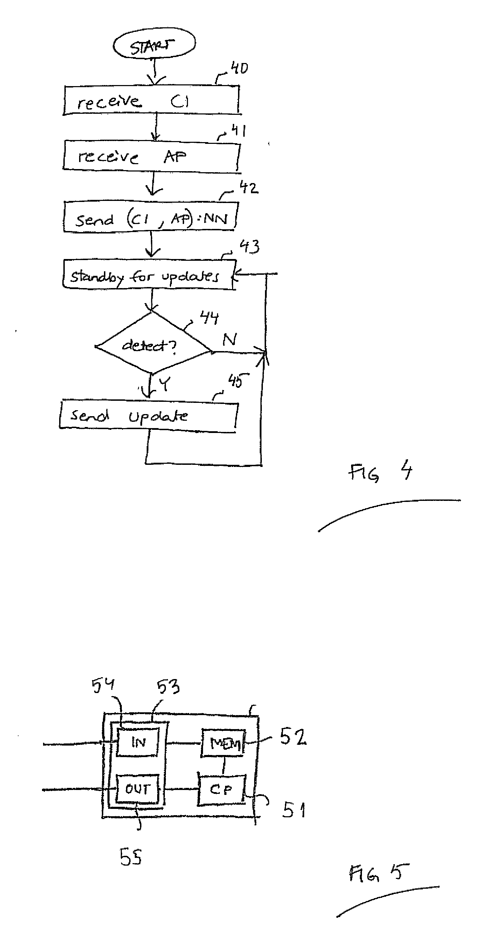

A flow chart of Figure 4 illustrates steps of a method performed in a communication device of U1 in the embodiment of Figure 1. The procedure starts when the communication device is operable and compiles (step 40) one or more pieces of contact information to be shared by means of a network node. For the elements of the contact information the device compiles (step 41) an access policy to be implemented in the network node. The pieces of information and guidelines for rules of the access policy may, for example, be automatically compiled by an application from the configuration files in the device memory and/or on the basis of information input by the user through the user interface of the device.

The generated contact information and the information for generating the access policy are sent (step 42) to the network node. After this, the device becomes standby (step 43) for changes in the contact information or the access policy definitions. If (step 44) a change is detected, the device sends (step 45) information of the change to the network node. The contact information U1 may be made available to a numerous group of other users centrally via the network node, but the availability of separate pieces of information is controlled efficiently according to the preferences of the user, but with minimal effort to the providing user.

Figure 5 illustrates an exemplary hardware configuration for the implementation of embodied apparatuses, for example applicable as the network node NN, or a communication device of U1 or U2 of Figure 1. The apparatus comprises a control unit 51, a processor element that comprises an arithmetic logic module, a number of special registers and control circuits. The apparatus also comprises a memory unit 52, a data medium where computer-readable data or programs or user data can be stored. The memory means typically comprise memory modules that allow both reading and writing (RAM), and memory modules whose contents can only be read (ROM). The apparatus also comprises an interface unit 53 with input unit 54 for inputting data for internal processing in the apparatus, and output unit 55 for outputting data from the internal processes of the apparatus.

Examples of said input unit 54 in a network node NN comprise plug-in units acting as a gateway for information delivered to its external connection points. For receiving information from the operator, the input unit 54 may also comprise a keypad, or a touch screen, a microphone, or the like. Examples of said output unit 55 in the network node NN include plug-in unit feeding information to the lines connected to its external connection points. For outputting information to the operator, the output unit 55 may also comprise a screen, a touch screen, a loudspeaker, or the like.

The interface unit 53 of a mobile station typically comprises at least a user interface unit for communicating with the user and a radio interface unit for communication over the radio access network. In addition, the user terminal may comprise additional interface units, for communication over another type of networks, or in another frequency, or over local communication technologies, as described above.

The control unit 51, memory unit 52, and interface block 53 are electrically interconnected to perform systematic execution of operations on received and/or stored data according to predefined, essentially programmed processes of the apparatus. In solutions according to the embodiments of the invention, these operations comprise functions for implementing the logical units, operations and interfaces of the network node NN as described in Figures 1 to 3 above, or of a communication device of user U1, as described in Figures 1 and 4 above.

The units and blocks of the apparatus may be implemented as one or more integrated circuits, such as application-specific integrated circuits (ASIC). Other hardware embodiments are also feasible, such as a circuit built of separate logic components. A hybrid of these different may also be applied. All modifications and configurations required for implementing functionality of an embodiment may be performed as routines, which may be implemented as added or updated software routines, application circuits (ASIC) and/or programmable circuits. Software routines may be downloaded into the apparatus.

It should be noted that only elements necessary for disclosing the present embodiment are illustrated in Figure 5. For a person skilled in the art it is clear that communication apparatuses comprise a plurality of further elements and functionalities not explicitly illustrated herein. In addition, the blocks illustrate logical or functional units that may be implemented in or with one or more physical units, notwithstanding whether they are illustrated as one or more blocks in Figure 5.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

It will be obvious to a person skilled in the art that, as the technology advances, the inventive concept can be implemented in various ways. The invention and its embodiments are not limited to the examples described above but may vary within the scope of the claims.

## Claims

1. A method, comprising:
storing a contact information file of a first user, the contact information file comprising at least two separable contact information records of the first user;
storing an authorization policy of the first user, the authorization policy comprising group information defining at least one group of one or more other users allowed to access the contact information file of the first user, and a filter associated with the group, the filter defining a set of one or more contact information records of the contact information file available to that group;
receiving from a second user a request for contact information of the first user;
checking with the authorization policy of the first user whether the second user is a member of any of the groups in the group information of the first user;
using the filter to control the availability of the one or more contact information records of the first user to the second user;
sending to the second user a response comprising the available contact information records of the first user.

2. A method according to claim 1, **characterized by** the authorization policy comprising more than one filter and by storing all filters in one filter file.

3. A method according to claim 1, **characterized by** the authorization policy comprising more than one filter and by storing all filters in separate filter files.

4. A method according to claim 1, **characterized by** storing the authorization policy of the user in one ruleset file and including the filters into the ruleset file.

5. A method according to any of claims 1 to 4, **characterized by** storing the group definition in one or more separate group definition files.

6. A method according to any of claims 1 to 4, **characterized by** storing the authorization policy of the user in one ruleset file and including the group definitions into the ruleset file.

7. A method according to any of claims 1 to 6, **characterized by** receiving from the second user a request for a set of one or more contact information records of the first user;
sending to the second user a response comprising a subset carrying only the available records from the set of requested records.

8. A method according to any of claims 1 to 7, **characterized in that** the contact information file is an XML file and the filter is a SIMPLE filter.

9. An apparatus, comprising:
a memory and a processor;
an interface element for connecting the apparatus to a communication network;
the memory, the processor and the interface element being operatively interconnected to perform systematic operations on received and/or stored data and provide
means for storing a contact information file of a first user, the contact information file comprising at least two separable contact information records of the first user;
means for storing an authorization policy of the first user, the authorization policy comprising group information defining at least one group of one or more other users allowed to access the contact information file of the first user, and a filter associated with the group, the filter defining a set of one or more contact information records of the contact information file available to that group;
means for receiving from a second user a request for contact information of the first user;
means for checking with the authorization policy of the first user whether the second user is a member of any of the groups in the group information of the first user;
means for using the filter to control the availability of the one or more contact information records of the first user to the second user;
means for sending to the second user a response comprising the available contact information records of the first user.

10. An apparatus according to claim 9, **characterized by** the authorization policy comprising more than one filter and the apparatus further comprising means for storing all filters in one filter file.

11. An apparatus according to claim 9, **characterized by** the authorization policy comprising more than one filter and the apparatus further comprising means for storing all filters in separate filter files.

12. An apparatus according to claim 9, **characterized by** the apparatus further comprising means for storing the authorization policy of the user in one ruleset file and including the filters into the ruleset file.

13. An apparatus according to any of claims 9 to 12, **characterized by** the apparatus further comprising means for storing the group definition in one or more separate group definition files.

14. An apparatus according to any of claims 9 to 12 **characterized by** the apparatus further comprising means for storing the authorization policy of the user in one ruleset file and including the group definitions into the ruleset file.

15. An apparatus according to any of claims 9 to 14, **characterized by** the apparatus further comprising
means for receiving from the second user a request for a set of one or more contact information records of the first user; and
means for sending to the second user a response comprising a subset carrying only the available records from the set of requested records.

16. An apparatus according to any of claims 9 to 15, **characterized in that** the contact information file is an XML file and the filter is a SIMPLE filter.

17. A computer program product readable by a computer and encoding a computer program of instructions for executing a computer process for controlling functions in a network node of a communication system, **characterized by** the process including:
storing a contact information file of a first user, the contact information file comprising at least two separable contact information records of the first user;
storing an authorization policy of the first user, the authorization policy comprising group information defining at least one group of one or more other users allowed to access the contact information file of the first user, and a filter associated with the group, the filter defining a set of one or more contact information records of the contact information file available to that group;
receiving from a second user a request for contact information of the first user;
checking with the authorization policy of the first user whether the second user is a member of any of the groups in the group information of the first user;
using the filter to control the availability of the one or more contact information records of the first user to the second user;
sending to the second user a response comprising the available contact information records of the first user.

18. An apparatus, comprising:
a memory and a processor;
an interface element for connecting the apparatus to a communication network;
the memory, the processor and the interface element being operatively interconnected to perform systematic operations on received and/or stored data and provide
means for compiling one or more pieces of contact information of a user;
means for compiling an authorization policy associated with the user, an authorization policy of the first user, the authorization policy comprising group information defining at least one group of one or more other users allowed to access the contact information file of the first user, and a filter associated with the group, the filter defining a set of one or more contact information records of the contact information file available to that group;
means for sending the compiled contact information and the authorization policy to a network node.

19. An apparatus according to claim 18, **characterized by**
means for detecting a change in the contact information of the user;
means for sending information of the change to the network node.

20. A computer program product readable by a computer and encoding a computer program of instructions for executing a computer process for controlling functions in a network node of a communication system, **characterized by** the process including:
compiling one or more pieces of contact information of a user;
compiling an authorization policy associated with the user, an authorization policy of the first user, the authorization policy comprising group information defining at least one group of one or more other users allowed to access the contact information file of the first user, and a filter associated with the group, the filter defining a set of one or more contact information records of the contact information file available to that group;
sending the compiled contact information and the authorization policy to a network node.
